# EUROPÄISCHE PATENTANMELDUNG

(11) **EP 1 416 010 A2**
(43) Veröffentlichungstag der Anmeldung: **06.05.2004**
(21) Anmeldenummer: 03019226.4
(22) Anmeldetag: 26.08.2003
(51) Int. Cl.: C08K 3/00, B29C 47/68, B29C 47/10, B29C 70/64, G02B 5/00

(54) **Verfahren zur Produktion von Polyamid-Nanocomposites und damit herstellbare Spritzguss-Formteile**

(30) Priorität: 06.09.2002 CH 15202002
(71) Anmelder: EMS-Chemie AG, 7013 Domat/Ems (CH)
(72) Erfinder: Stöppelmann, Georg, Dr., 7402 Bonaduz (CH); Ebert, Martina, Dr., 7013 Domat-Ems (CH); Kaisser, Michael, 7203 Trimmis (CH)
(74) Vertreter: OK pat AG

(57) **Zusammenfassung**

Betrifft ein Verfahren zur Herstellung von Polyamid-Nanocomposites aus teilkristallinen Polyamiden und aus organisch modifizierten Schichtsilikaten in einem Doppelschnecken-Extruder, wobei ein erster Teil der Polyamide in den Extruder-Einzug dosiert und aufgeschmolzen und das organisch modifizierte Schichtsilikat der Schmelze der Polyamide beigemischt und dann ein zweiter Teil der Polyamide der Mischung beigegeben wird. Das erfindungsgemässe Verfahren ist dadurch gekennzeichnet, dass die resultierende Schmelze einer Filtration unterzogen wird. Offenbart werden auch Spritzguss-Formteile und Fahrzeugfahrbeleuchtungesreflektoren aus der erfindungsgemäss hergestellten Polyamid-Nanocomposite-Formmasse.

## Beschreibung

Die Erfindung betrifft ein Verfahren zur Produktion von Polyamid-Nanocomposites entsprechend dem unabhängigen Anspruch 1 und daraus herstellbare Rohlinge, wie Spritzguss-Formteile bzw. Lichtreflektier-Bauteile.

Thermoplastische Kunststoffe, aus denen durch Spritzgiessen und anschliessende Metallisierung (Vakuumbeschichtung, zumeist mit Aluminium) lichtreflektierende Bauteile hergestellt werden, sind bekannt. Solche Bauteile sind z.B. Scheinwerferreflektoren für Automobile. Neben den früher ausnahmslos verwendeten Paraboloid-Scheinwerfern wurden zwei hinsichtlich Lichtausnutzung und Platzbedarf optimierte Grundtypen entwickelt, die Projektions- (Ellipsoid, Polyellipsoid) und die Freiflächen-Scheinwerfer. Da die Abdeckscheiben insbesondere von Freiflächen-Scheinwerfern in Folge der optimierten Lichtausnutzung und -verteilung dieses Reflektortyps meist ohne Profilierung gestaltet werden können, sind heute Klarsichtscheiben aus Polycarbonat oder Glas im Einsatz. Dies erhöht die Anforderungen an die Oberflächengüte der von aussen gut sichtbaren Elemente (z.B. Reflektor, Subreflektor, Blendrahmen), wobei die Dimensionsbeständigkeit in der Wärme, die mechanische Festigkeit, eine einfache Verarbeitung und geringe Fertigungstoleranzen weiterhin wichtig sind.

Solche Scheinwerferreflektoren können auch in den eigentlichen, im Wesentlichen eine Paraboloidform aufweisenden Reflektor und einen mehr oder weniger von der Paraboloidform abweichenden Subreflektor unterteilt werden. Der Reflektor ist das eigentliche, das Licht zur gewünschten Beleuchtung gezielt reflektierende Bauteil, das normalerweise in unmittelbarer Umgebung der das Licht erzeugenden Glühlampe angeordnet ist. Die Lampe erzeugt neben dem Licht auch Wärme, so dass der Reflektor je nach Konstruktion einer Betriebstemperatur von etwa 180-210 °C ausgesetzt ist. Für Spitzentemperaturen von über 220 °C oder wenn die optischen Anforderungen nicht so gross sind, kommt erfahrungsgemäss nur Blech als Reflektormaterial zum Einsatz.

Subreflektor wird der weiter von der Lichtquelle entfernte Teil der lichtreflektierenden Bauteile genannt. Subreflektoren decken oft den Bereich zwischen dem Reflektor und dem Lampengehäuse bzw. der übrigen Karosserie oder auch der durchsichtigen Lampenabdeckung ab. Subreflektoren müssen deshalb keine Paraboloid-Fortsetzung sein welche der Erhöhung der Lichtausbeute dienen, sie können viel mehr eine ästhetische Aufgabe erfüllen, indem sie eine reflektierende Oberfläche darstellen, die den Reflektor gestalterisch vergrössert. Durch den grösseren Abstand von der Lichtquelle ist für Subreflektoren mit einer Betriebstemperatur von maximal etwa 150 °C zu rechnen.

Metallschichten, die zur Verbesserung der Reflexion auf die Oberflächen der Reflektoren und zum Erzeugen eines gestalterischen Eindrucks auf die Subreflektoren aufgebracht werden, sind keiner direkten mechanischen Beanspruchung, wie z.B. Abrasion ausgesetzt. Trotzdem ist eine gute Haftfähigkeit der Metallschicht auf den Reflektor- und Subreflektorflächen wichtig, da Blasenbildungen oder gar Abblättern die Lichtausbeute beeinträchtigen und den gestalterischen Eindruck verschlechtern würden. Im Folgenden sind mit dem Ausdruck "Reflektor" immer auch Subreflektoren gemeint, wenn nicht ausdrücklich zwischen den Reflektoren und Subreflektoren unterschieden wird. Die Metallisierung der Reflektoren wird üblicherweise im Vakuum mittels Bedampfen mit PVD-Methoden (PVD = physical vapour deposition, z.B. Aufdampfen oder Sputtern von z.B. Aluminium) und/oder CVD-Methoden (CVD = chemical vapour deposition, wie z.B. plasma-unterstützte CVD) ausgeführt. Eine wichtige Anforderung an den Kunststoff ist deshalb eine geringe Ausgasrate unter den entsprechenden Vakuum- und Temperaturbedingungen. Damit die Metallschichten der Reflektoren im Betrieb nicht beschädigt werden, darf auch bei den genannten, hohen Betriebstemperaturen kein erhöhtes Ausgasen stattfinden. Zudem sollten die Reflektoren in einem Temperaturbereich von -50 °C bis 220 °C formstabil sein, d.h. das Ausdehnungs- und Schwindungsverhalten muss möglichst isotrop sein, damit - zumindest bei den Reflektoren - die Lichtausbeute bzw. Lichtbündelung nicht beeinträchtigt wird. Bevorzugt weisen die Metallschichten ein im Wesentlichen gleiches Ausdehnungsund Schwindungsverhalten wie die Reflektoren auf, so dass die Zug- bzw. Schubbeanspruchung der Reflexionsschichten möglichst klein ist. Dadurch wird zusätzlich die Gefahr einer Rissbildung oder Stauchung in den Reflexionsschichten reduziert.

Eine weitere Anforderung betrifft die Oberflächengüte der zu beschichtenden (meist gekrümmten) Kunststoffoberfläche. Speziell bei Reflektoren, bei welchen die Lichtausbeute essentiell ist, muss eine möglichst homogene, glatte, hochglänzende Oberfläche für die Beschichtung bereitgestellt werden. Schlecht fliessende oder zu früh erstarrende Kunststoffe bzw. eine Zugabe von Füllstoffen führen in der Spritzgussform oft zu einem rauhen, matten oder unregelmässigen Abdruck, gemessen an den extrem hohen Anforderungen einer spiegelglatten Oberfläche, selbst wenn die entsprechende Oberfläche des formgebenden Werkzeugs hochglanzpoliert ist.

Bisher wurden zum Herstellen von Reflektoren zumeist Duroplaste, seltener auch Thermoplaste eingesetzt. Von den letzteren weisen die hauptsächlich verwendeten, amorphen Thermoplaste, z.B. Polyetherimid (PEI) oder Polyethersulfone (PES bzw. PSU oder PPSU), eine hohe Glasübergangstemperatur (Tg) auf. Diese amorphen Hoch-Tg-Thermoplaste (HT-Thermoplaste) können ohne Füllstoffe zum Erzeugen von Reflektor-Rohlingen mit einer hervorragenden Oberflächenglätte verwendet werden. Die Reflektor-Rohlinge können direkt metallisiert werden. Nachteilig für eine Massenproduktion ist allerdings der hohe Preis dieser amorphen HT-Thermoplaste. In der Beleuchtungseinheit treten naturgemäss die höchsten Temperaturen auf. Daher wurden bisher die Reflektoren entweder aus Blech oder metallisierten Spritzgussteilen aus Duroplast (BMC) oder amorphen HT-Thermoplasten (PC-HT, PEI, PSU, PES) hergestellt. Die hohen Toleranzanforderungen, gekoppelt mit der für die Metallisierung erforderlichen Oberflächengüte der Spritzgussteile wurden bisher nur von ungefüllten amorphen HT-Thermoplasten oder lackierten Duroplasten erfüllt, so dass der Einsatz von teilkristallinen Werkstoffen allgemein ausgeschlossen wird.

Durch die Einführung der Klarglaslinsen, die auf dem europäischen Markt in dem überwiegenden Teil neuer Kraftfahrzeugmodelle eingesetzt werden, haben die Blendrahmen oder Subreflektoren eine grosse Bedeutung erlangt, diese werden zumeist vollständig metallisiert. Neben der Basisfunktion der Blendrahmen als Bestandteil des Hauptscheinwerfers zur Anpassung an Kotflügel- bzw. Motorhauben-Geometrien und beleuchtungstechnischer Funktionen, treten vor allem stilistische Merkmale zunehmend in den Vordergrund. Wesentliche Anforderungen an den Blendrahmen sind (ähnlich wie bei den Reflektoren) die leichte Verarbeitbarkeit, hervorragende Oberflächengüte, leichte Metallisierbarkeit, Beständigkeit gegenüber Umwelteinflüssen und Feuchtigkeit, Temperaturbeständigkeit und Dimensionsstabilität. Über diese traditionellen Funktionen hinaus werden zunehmend weitere Funktionseinheiten, beispielsweise Reflektoren für Seitenblinker, in den Blendrahmen bzw. den Subreflektor integriert. Um diesem Anforderungsprofil gerecht zu werden, wurde bisher eine breite Palette ausgehend von technischen Kunststoffen über Polymerblends bis zu HT-Thermoplasten eingesetzt. Beispiele sind Polyamid, Polycarbonat, Polysulfon (nicht aber Polyolefine) sowie Blends auf der Basis von und PC, insbesondere aber von PBT. Zur Lösung spezieller thermischer Anforderungen kommen HT-Thermoplaste (Irisiertemperatur bis 212 °C für Ultrason E von BASF Ludwigshafen, Deutschland), deren Verwendung ist aber aus ökonomischen Gründen limitiert. "Ultrason E" ist ein Polyarylenethersulfon der BASF. Im Zuge der fortschreitenden Komplexizitätsreduzierung findet zur Zeit eine zunehmende Integration von Scheinwerferkomponenten zu hoch entwickelten Beleuchtungssystemen statt, die höhere Materialanforderungen erwarten lassen [J. Queisser, M. Geprägs, R. Blum und G. Ickes, Trends bei Automobilscheinwerfern, *Kunststoffe* 3/2002, Hanser Verlag, München].

Sehr hohe Wärmeformbeständigkeit weist auch das teilkristalline Polyphenylensulfid (PPS) auf, das z.B. in EP 0 332 122 zur Herstellung von Scheinwerferreflektoren erwähnt ist. Dort ist ein Herstellungsverfahren offenbart, bei welchem in einem ersten Arbeitsschritt ein Reflektor-Rohling (unter Zusatz von maximal 25 % Russ zum Erzielen einer erhöhten elektrischen Leitfähigkeit) spritzgegossen wird. In einem zweiten Arbeitsschritt wird der Reflektor-Rohling, zum Ausgleichen von Unebenheiten und zur Erzielung einer glänzenden Oberfläche, elektrostatisch lackiert und in einem dritten Arbeitsschritt im Vakuum aluminisiert. Dieses Verfahren wird, wegen des zusätzlichen Lackierschrittes, allgemein als zu kompliziert und zu kostenintensiv für die Massenproduktion von Reflektoren betrachtet. Zudem ist als nachteilig bekannt, dass die Zugabe von Füllstoffen die Fliessfähigkeit einer Spritzgussmasse erniedrigt und die Oberflächen der so produzierten Rohlinge aufrauht.

Aus EP 0 696 304 sind Zusammensetzungen bekannt, welche (a) ein erstes Polyamid, hergestellt aus einer aromatischen Carbonsäurekomponente (Isophthalsäure bzw. Terephthalsäure) einer aliphatischen Diaminkomponente (Hexamethylendiamin und 2-Methyl-1,5-pentamethylendiamin); (b) ein sich vom ersten Polyamid unterscheidendes, zweites, aliphatisches (Polyamid 66, Polyamid 6 oder Polyamid 46) oder teilaromatisches Polyamid; und (c) einen mineralischen Füllstoff (Kaolin, Talk, Glimmer oder Wollastonit) umfassen. Aus EP 0 696 304 geht hervor, dass entsprechende Zusammensetzungen mit einem hohen Füllanteil an Kaolin oder Glimmer (mindestens 40 %) einen HDT/A-Wert von über 200 °C erreichen können, dass aber nur in den Fällen eine glänzende Oberfläche beobachtet wird, in denen die Zusammensetzung ausserdem noch 10 % Glasfasern umfasst. Die Beigabe solcher Glasfasern beeinträchtigt aber ebenfalls die Fliessfähigkeit der Zusammensetzung beim Spritzgiessen von Formteilen und führt zu einer unebenen Oberfläche sowie zu einem weniger isotropen bzw. stärker anisotropen Schwindungsverhalten.

Aus JP 11 279 289 und JP 11 303 678 sind Zusammensetzungen bekannt, welche granuläre metallische Füllstoffe, die Al, Ni, Sn, Cu, Fe, Au, Ag, Pt, oder Legierungen wie z.B. Messing oder rostfreien Stahl (besonders bevorzugt aber Al) umfassen und aus denen sich Formteile mit einer metallfarbigen Oberfläche herstellen lassen. Der metallische Eindruck der Oberfläche eines entsprechenden Formteils wird entscheidend durch die Korngrösse der Metallpartikel bestimmt, deren nützlicher mittlerer Durchmesser zwischen 10 µm und 200 µm liegen soll. Wenn möglich sollte aber aus Gründen der einfacheren Wiedergewinnung bzw. Rückführung des Materials in die Herstellung von neuen Bauteilen auf die Verwendung von solchen partikulären Metallzugaben verzichtet werden.

Unter dem Namen Minlon® (E.I. du Pont de Nemours & Co., Wilmington, USA) ist ein Material zur Herstellung von Strassenbeleuchtungsreflektoren bekannt. Bei dem genannten Produkt handelt es sich um Nylon 66 (PA 66), welches neben einem Hitzestabilisator auch 36-40 % klassische Mineralstoffe umfasst. Allerdings erscheint dieses Material von der Oberflächengüte her für Fahrzeugfahrbeleuchtungen nicht geeignet.

Aus DE 198 47 844 sind Folienanwendungen bekannt, bei welchen einem kristallisierbaren Polymer maximal 1 % an nanoskaligen Füllstoffen als Nukleierungsmittel zum Verfeinern der Kristallisation und dadurch zum Verbessern der Folieneigenschaften beigegeben werden. So wurden Formteile mit hoher Steifigkeit, Härte, Abriebfestigkeit und Zähigkeit bzw. Folien mit guter Transparenz und hohem Glanz erzielt.

Aus EP 0 940 430 sind Polyamid-Nanocomposites mit guter Wärmeformbeständigkeit bekannt. Die Verwendung dieser Polyamidzusammensetzung für Gehäuse oder mechanische Teile in der Elektrik oder Elektronik (z.B. Schalter oder Stekker), Aussen- oder Innenteile an Automobilen sowie Getriebe- oder Lagergehäuse im Maschinenbau ist offenbart.

Im Dokument EP 0 598 836 B1 ist die Bildung polymerer Nanocomposites mit exfoliiertem Schichtmaterial in einem Schmelzverfahren beschrieben. So wurde zum Beispiel modifizierter Montmorillonit mit einem Extruder in Nylon 6 eingearbeitet. Daraus hergestellte Formteile weisen verbesserte Eigenschaften auf und sind für diverse Einsatzzwecke geeignet.

Aus WO 03/064503 A1 ist ein gattungsgemässes Verfahren zur Herstellung von Polyamid-Nanocomposites aus Polyamiden und aus organisch modifizierten Schichtsilikaten in einem Doppelschnecken-Extruder bekannt. Gemäss jenem Verfahren wird ein erster Teil der Polyamide in den Extruder-Einzug dosiert und aufgeschmolzen und das organisch modifizierte Schichtsilikat der Schmelze der Polyamide beigemischt. Ein zweiter Teil der Polyamide wird dann der Mischung beigegeben.

Die Aufgabe der vorliegenden Erfindung besteht darin, ein alternatives Verfahren vorzuschlagen, mit welchem spritzgegossene Reflektoren mit zumindest annähernd gleich guter Oberfläche (die z.B. für die direkte Beschichtung mit einer Metallschicht geeignet ist) und mit zumindest annähernd gleich guter Wärmeformbeständigkeit hergestellt werden können, wie mit aus dem Stand der Technik bekannten Materialien.

Diese Aufgabe wird durch die Merkmale des unabhängigen Anspruchs 1 gelöst. Bevorzugte Ausführungsformen und weitere Merkmale ergeben sich aus den abhängigen Ansprüchen.

Das erfindungsgemässe Verfahren zur Herstellung von Polyamid-Nanocomposites aus teilkristallinen Polyamiden und aus organisch modifizierten Schichtsilikaten in einem Doppelschnecken-Extruder, bei dem ein erster Teil der Polyamide in den Extruder-Einzug dosiert und aufgeschmolzen wird und bei dem das organisch modifizierte Schichtsilikat der Schmelze der Polyamide beigemischt und dann ein zweiter Teil der Polyamide der Mischung beigegeben wird, ist dadurch gekennzeichnet, dass die resultierende Schmelze einer Filtration unterzogen wird.

Das dabei produzierte Material ist eine Polyamid-Formmasse mit einem teilkristallinen Polyamid und einem mineralischen Füllstoff, wobei der mineralische Füllstoff bevorzugt eine ultrafeine Körnung mit einer mittleren Partikelgrösse von maximal 100 nm aufweist. Weil die exfoliierten Schichtsilikate beispielsweise bei einem synthetischen Fluorglimmer in Längsrichtung auch 1000 nm Länge aufweisen können, bezieht sich diese Grössenangabe zumindest auf eine Dimension. Unter dem Begriff Polyamid werden Homopolyamide, Copolyamide und Mischungen aus Homopolyamiden und/oder Copolyamiden verstanden. Besonders bevorzugt sind Polyamid-Nanocomposites mit aliphatischen Polyamiden und Phyllosilikaten. Dabei sind die Homopolyamide PA 6, PA 66, PA 46 sowie PA 11 und PA 12 bevorzugt. Alternativ sind auch Mischungen aus teilkristallinen Polyamiden mit einem Anteil amorphem Polyamid denkbar; ein Anteil teilkristallines Polyamid ist jedoch in allen erfindungsgemäss hergestellten Polyamid-Nanocomposites immer vorhanden. Ein bevorzugtes Bespiel für diese Variante ist eine Mischung aus teilkristallinem PA 66 und amorphem PA 6I/6T, das bei der EMS-Chemie AG (CH-7013 Domat/Ems) unter dem Handelsnahmen GRIVORY® GV erhältlich ist.

Vorzugsweise kommen organisch modifizierte Phyllosilikate zum Einsatz, besonders bevorzugt solche des Dreischichttyps (2:1), von denen die Polyamid-Formmasse bevorzugt maximal 10 Gew.% umfasst.

Zu den Phyllosilikaten (Schichtsilikaten) des Dreischichttyps (2:1) zählen Glimmer (z.B. Muskovit, Paragonit, Phologopit, Biotit, Lepidolith, Margarit), Smektite (Montmorillonit, Hectorit) und Vermiculit. Diese werden bevorzugt in organisch modifizierter Form eingesetzt, damit sie sich in exfoliierter Form in der Polyamidmatrix dispergieren lassen und als Nanocomposites ihre maximale Wirkung entfalten.

Aus den Polyamid-Formmassen der vorliegenden Erfindung lassen sich trotz des Füllstoffanteils Rohlinge spritzgiessen, die in dem Bereich, wo die Werkzeugform hochglanzpoliert war, sich durch eine glatte Oberfläche mit hohem Glanz auszeichnen. Dies ist umso erstaunlicher, weil im Vergleich zu den amorphen, ungefüllten Hoch-Tg-Thermoplasten sowohl die Kristallisation bei der Erstarrung der Formmasse als auch der Füllstoff die Fliessfähigkeit und Abdruckgenauigkeit der Formmasse reduzieren. Besonders geeignet sind solche Rohlinge für die direkte Metallisierung (z.B. mittels PVD-Methoden) und Verwendung als Reflektoren.

Es soll noch angemerkt werden, dass die Polyamid-Formmassen über den erfindungsgemässen Füllstoff hinaus auch noch übliche Additive, wie z.B. Stabilisatoren (unterschiedlicher Art), Flammschutzmittel, Verarbeitungshilfsmittel, Antistatikmittel und weitere Zusatzstoffe enthalten können. So enthielten die Polyamid-Formmassen der nachfolgenden Beispiele jeweils einen Hitzestabilisator.

An Hand der Abbildungen (Fig. 1 bis 4; der weisse Balken stellt jeweils eine Strecke von 50 µm dar), welche lediglich ausgewählte Beispiele repräsentieren und den Umfang der vorliegenden Erfindung in keiner Weise beschränken, wird die Erfindung näher erläutert. Dabei zeigt:
- Fig. 1: einen Rohling aus einer erfindungsgemäss hergestellten, spritzgegossenen Polyamid-Formmasse mit 6 % Silikat 1, gemäss Beispiel 1;
- Fig. 2: einen Rohling aus einer erfindungsgemäss hergestellten, spritzgegossenen Polyamid-Formmasse mit 6 % Silikat 2, gemäss Beispiel 2;
- Fig. 3: einen Rohling aus einer herkömmlichen, spritzgegossenen Polyamid-Formmasse mit 30 % normalem CaCO₃ zum Vergleich;
- Fig. 4: einen Rohling aus einer herkömmlichen, spritzgegossenen Polyamid-Formmasse mit 40 % Kaolin zum Vergleich.

In den unten stehenden Beispielen 1 und 2 bzw. im Vergleichsbeispiel 1 wurde jeweils Polyamid 6 eingesetzt, bei welchem die folgenden Eigenschaften gemessen wurden:
- die relative Viskosität 1%-ig in Schwefelsäure bei 25 °C beträgt 2.85;
- der Schmelz-Volumen-Index (MVI) bei 275 °C/5 kg beträgt 90 cm³/10 min.

Die erfindungsgemäss hergestellten Nanocomposite-Formmassen wurden auf einem 30 mm-Doppelschneckenextruder ZSK 25 der Firma Werner&Pfleiderer bei Temperaturen zwischen 240 °C und 300 °C hergestellt. Dabei wurde ein erster Teil der Polyamide in den Extruder-Einzug dosiert und aufgeschmolzen und das organisch modifizierte Schichtsilikat der Schmelze der Polyamide beigemischt. Ein zweiter Teil der Polyamide wurde dann der Mischung beigegeben und die resultierende Schmelze schliesslich einer Filtration unterzogen. Zur Schmelze-Filtration wurden kontinuierliche Schmelzefilter der Maschinenfabrik Kreyenborg GmbH (D-48061 Münster-Kinderhaus, Deutschland) eingesetzt, wobei sich im Kolben befindende Drahtgeflechte zum Einsatz kamen, welche hydraulisch in den Schmelzestrom gefahren werden können.

### Beispiel 1

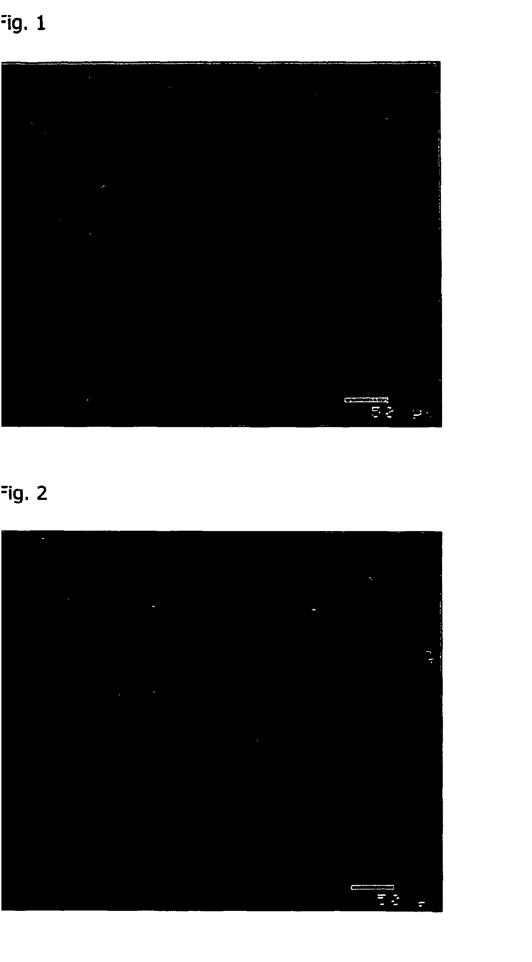

Als Schichtsilikat wurde Na-Montmorillonit mit einer Kationenaustausch-Kapazität (CEC) von 140 mÄq/g Mineral eingesetzt. Die organische Modifizierung erfolgte mit 25 Gew.% Methyl-, bis-2-hydroxyethyl-stearyl Ammoniumchlorid und ergab einen Schichtabstand des behandelten Na-Montmorillonits von d_{L}: 1.85 nm. Eine Zugabe von 6 % dieses Silikats zu PA 6 ergab einen Rohling aus einer spritzgegossenen Polyamid-Formmasse, der eine durch eine hochglanzpolierte Werkzeugform erzeugte glatte Oberfläche mit hohem Glanz umfasst (vgl. Fig. 1).

### Beispiel 2

Als Schichtsilikat wurde Na-Montmorillonit mit Kationenaustausch-Kapazität (CEC) von 100 mÄq/g Mineral eingesetzt. Die organische Modifizierung erfolgte mit 30 Gew.% Methyl-, bis-2-hydroxyethyl-Fettsäure Ammoniumchlorid und ergab einen Schichtabstand des behandelten Na-Montmorillonits von d_{L}: 1.80 nm. Eine Zugabe von 6 % dieses Silikats zu PA 6 ergab einen Rohling aus einer spritzgegossenen Polyamid-Formmasse, der eine durch eine hochglanzpolierte Werkzeugform erzeugte glatte Oberfläche mit hohem Glanz umfasst (vgl. Fig. 2). Vergleichsbeispiel 1

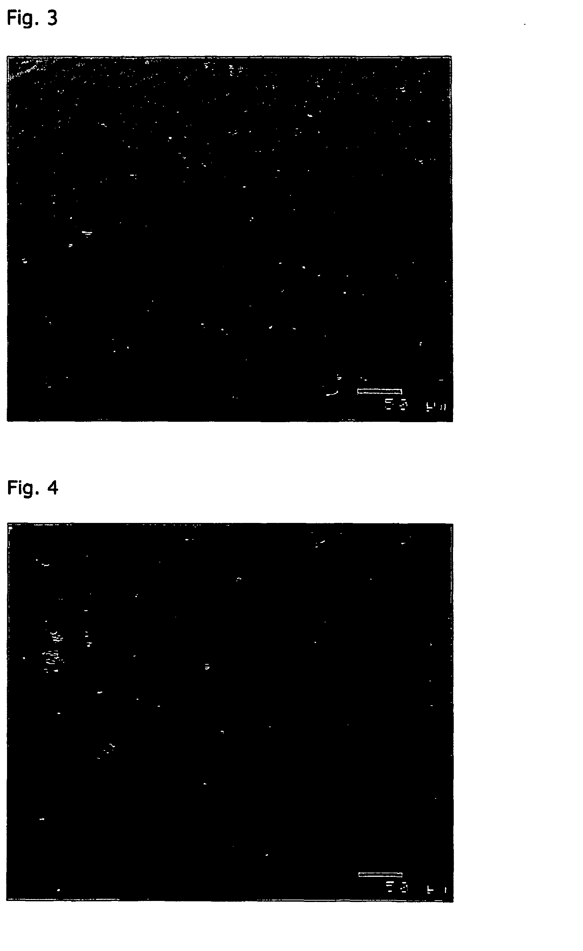

Nicht erfindungsgemäss hergestellte Rohlinge wurden zu Vergleichszwecken mit einer Zugabe von 30 % natürlich gemahlenem CaCO₃ mit einem mittleren Teilchendurchmesser von 3 µm, einer Dichte von 2.7 g/cm³, einem pH-Wert von 9 und einem Weissgrad nach DIN 53163 von 90 % zu PA 6 (vgl. Fig. 3) bzw. 40 % kalziniertem, mit Aminosilan behandeltem Kaolin mit einem mittleren Teilchendurchmesser von 1.3 µm, einer Dichte von 2.6 g/cm³ und einem pH-Wert von 9 zu einer Mischung von PA 66 + PA 6I/6T (vgl. Fig. 4) hergestellt und ergaben - verglichen mit den erfindungsgemässen Rohlingen von Figur 1 und 2 - wesentlich rauhere Oberflächen.

Die Prüfung der erfindungsgemäss und nicht erfindungsgemäss hergestellten Formmassen (vgl. Tabelle 1) wurden gemäss folgenden Vorschriften durchgeführt:
- Schmelz-Volumen-Index (MVI) bei 275 °C/5 kg nach ISO 1133 (an Stelle der Abkürzung MVI ist auch die Abkürzung MVR gebräuchlich);
- Schlag- und Kerbschlagzähigkeit nach ISO 179/1eU;
- Bruch- und Streckspannung, Bruchdehnung und Zug-E-Modul gemäss ISO 527;
- HDT A und B nach ISO 75.

Zur Beurteilung der Oberflächengüte der Formmassen wurden Platten in hochglanzpolierten Spritzgussformen hergestellt und anschliessend mit Palladium bedampft. Die gezeigten Raster-Elektronen-Mikroskop-Aufnahmen bei 200-facher Vergrösserung (vgl. Fig. 1 bis 4) zeigen nur bei den erfindungsgemässen Formmassen einwandfreie und gleichmässige Oberflächen.

**Tabelle 1:**

| | | | Beispiel 1 | Beispiel 2 | Vergleichsbeispiel 1 |
|---|---|---|---|---|---|
| PA 6 | | Gew.-% | 94 | 94 | 70 |
| Silikat 1 | | Gew.-% | 6 | - | - |
| Silikat 2 | | Gew.-% | - | 6 | - |
| CaCO₃ | | Gew.-% | - | - | 30 |
| Dichte | ISO-Stab | g/cm³ | 1.14 | 1.15 | 1.39 |
| Asche | Granulat/550 °C | % | 4 | 4 | 31 |
| MVI | 275 °C/5 kg | cm³/10 min | 30 | 25 | 40 |
| Zug-E-Modul | trocken | MPa | 4400 | 4550 | 4750 |
| Bruchspannung | trocken | MPa | 100 | 100 | 95 |
| Bruchdehnung | trocken | % | 4 | 3 | 4 |
| Schlag Charpy Neu | 23 °C | kJ/m² | 80 | 80 | 75 |
| Schlag Charpy Neu | -30 °C | kJ/m² | 70 | 90 | 55 |
| Kerbschlag Charpy Neu | 23 °C | kJ/m² | 4 | 4 | 4 |
| Kerbschlag Charpy Neu | -30 °C | kJ/m² | 3 | 3 | 4 |
| HDT A | 1.8 MPa | °C | 100 | 100 | 100 |
| HDT B | 0.45 MPa | °C | 180 | 185 | 195 |
| Zug-E-Modul | 150 °C | MPa | 560 | 580 | 600 |

Zusätzlich zu den gezeigten, mit dem Rasterelektronenmikroskop abgebildeten Resultaten wurden Oberflächenmessungen an Proben durchgeführt. Dabei wurde der Mittenrauhwert (Rₐ) bzw. die gemittelte Rauhtiefe (R_{z}) nach DIN Norm 4768 ermittelt. Die Auflösung des Messgerätes betrug in jedem Fall 9.12 nm. Beim Mittenrauhwert (Rₐ) handelt es sich um den Mittelwert aus den Einzelrauhtiefen fünf aufeinanderfolgender Einzelmessstrecken (Iₑ). Die gemittelte Rauhtiefe (R_{z}) ist der arithmetische Mittelwert aller Beträge des Rauheitsprofils R innerhalb einer Gesamtmessstrecke (Iₘ). In der Tabelle 2 sind die Resultate zusammengestellt.

**Tabelle 2:**

| | Probe | | | |
|---|---|---|---|---|
| | W3082_V1 | W3082_V3 | Ultrason E | W4320 metallisiert |
| Mittenrauhwert (Rₐ) | 0.0734 µm | 0.0734 µm | 0.0329 µm | 0.0334 µm |
| gemittelte Rauhtiefe (R_{z}) | 5.67 µm | 5.67 µm | 1.01 µm | 1.17 µm |

Bei W4320 handelt es sich um das erfindungsgemässe Beispiel 1, wobei metallisiert mit Aluminium bedampft heisst. W3082_V1 und W3082_V3 sind ein PA6T/6I 70/30 mit dem Kaolin aus Vergleichsbeispiel 1. In den erfindungsgemässen Beispielen wurden zur Modifizierung der Schichtsilikate organische Ammoniumchloride eingesetzt. "Ultrason E" ist ein Polyarylenethersulfon der BASF.

Anhand von Grauwertdarstellungen der Messungen wurde eine Grenze von noch tolerierbaren Werten für Rₐ von 0.05 µm und für R_{z} von 4 µm ermittelt. Aus der Tabelle 2 geht klar hervor, dass die beiden Proben Ultrason E und W4320 metallisiert die Bedingungen für eine gute Oberflächenqualität und damit auch für eine gute Abbildung der Spritzgussform erfüllen.

Erfindungsgemäss hergestellte Rohlinge auf der Basis von aliphatischen Polyamiden sind zur Produktion von Reflektoren für etwas weniger heisse Einsatzorte geeignet, z.B. als Reflektoren für Signal- oder Strassenleuchten bzw. als Subreflektoren für Fahrzeugfahrbeleuchtungen. Die entsprechenden Formmassen enthalten typischerweise ca. 6 bis 8 Gew.-% Phyllosilikat, was ihnen höhere Steifigkeit (Zug-Modul), Festigkeit und HDT/A verleiht. Mit den erfindungsgemäss hergestellten Polyamid-Formmassen können wirtschaftliche Lösungen als Ersatz für teurere Werkstoffe zur Verfügung gestellt werden.

Als Verfahren zum Herstellen der Polyamid-Formmassen ist die Zumischung des mineralischen Füllstoffs zum Polyamid in einem Doppelschneckenextruder bevorzugt (Compoundierung). Alternativ könnten die Phyllosilikate auch dem Reaktionsansatz der Monomeren des aliphatischen Polyamids zugemischt werden.

Wird das erfindungsgemässe Compoundierverfahren zur Herstellung der Polyamid-Nanocomposites eingesetzt, müssen zwei Faktoren beachtet werden:
1) Die Verteilung der Schichtsilikatpartikel soll möglichst homogen sein;
2) Die Polyamid-Nanocomposite-Formmasse soll eine möglichst geringe thermische Schädigung erfahren.

Die Verteilung der Schichtsilikatpartikel beeinflusst die Oberflächenrauheit von frisch produzierten Spritzguss-Formteilen. Eine gute Verteilung lässt sich durch die Wahl des Compoundierverfahrens beeinflussen. Die besten Verteilungen wurden durch die Zugabe des Minerals in die Schmelze erreicht. Würde das Mineral während der Aufschmelzphase des Polyamid-Granulats hinzugegeben, bestände die Gefahr, dass sich Silikat-Aggregate bilden könnten. Je nach Schichtsilikat und Polyamid-Matrix ist eine Anpassung der Schneckengeometrie und der Dosierung notwendig, um eine starke Verbesserung der Silikatverteilung zu erreichen.

In überraschender Weise hat sich gezeigt, dass bei Spritzguss-Formteilen aus den erfindungsgemäss hergestellten Polyamid-Nanocomposites eine gute Oberflächenqualität erreicht wird, wenn ein erster Teil (z.B. 60 bis 80 Gew.-%, vorzugsweise 70 Gew.-%) des Granulats der Polyamide in den Einzug des Extruders dosiert werden und das organisch modifizierte Schichtsilikat (vorzugsweise 2 bis 8 Gew.-%, besonders bevorzugt 2 bis 6 Gew.-%, ganz speziell bevorzugt 2.5 bis 6 Gew.-%) in die Schmelze dieses Granulatanteils dosiert werden. Dies geschieht vorzugsweise ohne Verwendung eines Sidefeeders, einfach durch Gravitation, so dass sich dann etwa 40 bis 20% (vorzugsweise 30 Gew.-%) an Schichtsilikaten in der im Folgenden als "Masterbatch" bezeichneten Mischschmelze befinden.

Die beste Oberflächenqualität wird jedoch erreicht, wenn bei einem Verfahren zur Herstellung von Polyamid-Nanocomposites aus Polyamiden und aus organisch modifizierten Schichtsilikaten in einem Doppelschnecken-Extruder, ein erster Teil der Polyamide in den Extruder-Einzug dosiert und aufgeschmolzen und das organisch modifizierte Schichtsilikat der Schmelze der Polyamide beigemischt, dann ein zweiter Teil der Polyamide dem Masterbatch beigegeben wird und schliesslich die resultierende Schmelze einer Filtration unterzogen wird. Diese Schmelze-Filtration erfolgt bevorzugt unmittelbar vor der Extruder-Düse. Alternativ kann eine Schmelze-Filtration während eines separaten Extrusionsdurchganges erfolgen.

Zur Schmelze-Filtration können verschiedene Systeme eingesetzt werden. Beispielsweise Sandfilter oder kontinuierliche Schmelzefilter der Firma Gneuss oder der Firma Kreyenborg. Beim letzteren Verfahren kommen Drahtgeflechte zum Einsatz, die sich im Kolben befinden und die hydraulisch in den Schmelzestrom gefahren werden können. Vorzugsweise werden mindestens zwei Filter gleichzeitig verwendet, damit kontinuierlich gearbeitet werden kann. Im Normalbetrieb befinden sich Drahtfilter im Schmelzestrom. Zum Filterwechsel wird ein Kolben mitsamt dem Filter aus der Schmelze gezogen und ein Siebwechsel durchgeführt. Anschliessend wird analog mit dem zweiten Filter verfahren. Die Maschenweite dieser Drahtfilter beträgt vorzugsweise höchstens 200 µm, besonders bevorzugt zwischen 50 und 100 µm.

Ein zweiter Teil der Polyamide wird erst später zugegeben, um - in nur einem einzigen weiteren Schritt - die Endkonzentration der Schichtsilikate von maximal 10 % in der Schmelze des Polyamid-Nanocomposites einzustellen. Durch diese Zweischritt-Technik wird eine optimale Exfoliierung der Schichtsilikate erreicht, ohne dass sich in den Polyamid-Nanocomposite-Formmassen Agglomerate bilden. Diese Zugabe des zweiten Teils der Polyamide erfolgt bevorzugt über einen Sidefeeder; alternativ kann dieser zweite Teil der Polyamide dem Schmelzgemisch im Extruder auch durch Einrieseln zugegeben werden.

Alle Angaben in Gew.-% beziehen sich auf die Summe der Rezepturbestandteile von 100 Gew.-%.

Die Extrusionsparameter (tiefes Temperaturprofil, hohe Drehzahl, hoher Durchsatz) und die Schneckengeometrie sind vorzugsweise so gewählt, dass eine hohe Scherung erreicht wird. Die Drehzahl der Schnecke beträgt dabei vorzugsweise mehr als 200 Umdrehungen pro Minute (U/min). Besonders bevorzugt ist eine Drehzahl von mindestens 300 U/min, ganz speziell bevorzugt ist eine Drehzahl von 400 U/min.

Ein hoher Durchsatz ist auch bevorzugt. Für den verwendeten Doppelschnecken-Extruder (WP ZSK 25) stellt ein Durchsatz von 20 kg/h in Kombination mit diesen Rezepturen das Maximum dar. Allgemein sollte immer im oberen Viertel des Durchsatz- und Drehzahlbereichs des verwendeten Extruders gearbeitet werden, bevorzugt am oberen Durchsatz- und Drehzahllimit. Das Durchsatzlimit wird durch das maximal mögliche Drehmoment bei den gewünschten tiefen Temperaturen bestimmt.

Die Schneckengeometrie ist ebenfalls von Bedeutung. Es ist eine gute Aufschmelzung des ersten Granulatanteils, z.B. durch Knetblöcke zu gewährleisten, bevor das Schichtsilikat hinzukommt. Nach dessen Zugabe und vor dem Sidefeeder ist nochmals eine gute Mischwirkung notwendig. Nach dem Sidefeeder muss ausreichend Knet- und Mischwirkung zur Verfügung gestellt werden. Auch Verweilzeit steigernde Massnahmen wirken sich positiv auf das Ergebnis aus, dürfen jedoch nicht zu einem übermässigen Abbau der Polyamide führen.

Ausserdem sollte die Schnecke vorzugsweise so gestaltet sein, dass zur Entgasung das Anlegen von Vakuum vor der Düse möglich ist. Dabei wird ein Druck bzw. ein Vakuum von weniger als 200 mbar bevorzugt; besonders bevorzugt wird ein Druck bzw. ein Vakuum von weniger als 50 mbar.

Die am Extruder eingestellten Temperaturen sind, bezogen auf den Schmelzpunkt und die Schmelzviskosität des Polymeren, eher tief zu wählen. Bevorzugt werden Temperaturen, die 10 °C bis 20 °C tiefer als beim Einarbeiten von anderen Füllstoffen liegen.

Eine zu starke thermische Belastung der erfindungsgemäss hergestellten Polayamid-Nanocomposites führt im späteren Betrieb der Reflektorbauteile zu Problemen durch Ausschwitzen der Abbauprodukte des Polyamids sowie der für die Silikat-Modifizierung verwendeten Substanzen.

Bewährt hat sich für die organische Silikat-Modifizierung die Verwendung von organischen Ammoniumsalzen (vgl. Beispiele 1 und 2). Neuere Versuche haben jedoch ergeben, dass Schichtsilikate, die unter Verwendung von Phosphoniumsalzen der Formel P-R₄-X organisch modifiziert werden, in Kombination mit dem erfindungsgemässen Herstellungsverfahren eine besonders gute, wenn nicht sogar bessere Oberflächenqualität der Spritzguss-Formteile bewirken. Dabei stellt R Alkyl- oder Aryl-Reste dar und X ist stellvertretend für ein Cl, Br oder J. Eine Erklärung für das besonders gute Ergebnis kann darin gesehen werden, dass Phosphoniumsalze eine besonders hohe thermische Beständigkeit der Polyamid-Nanocomposites bewirken.

An Stelle eines einzigen Polyamidtyps ist auch der Einsatz eines Polyamid-Blends möglich.

Die erfindungsgemässen Polyamid-Formmassen werden bevorzugt zum Spritzgiessen von Reflektoren (bzw. Subreflektoren) verwendet. Zum Erhalt von besonders präzisen Reflektoroberflächen kann beim Spritzgiessen in einer Spezialversion die Gasinnendrucktechnik (siehe z.B. in *PLASTVERARBEITER*, 5/2002, erschienen im Hüthig Verlag, D-69121 Heidelberg) eingesetzt werden.

## Patentansprüche

1. Verfahren zur Herstellung von Polyamid-Nanocomposites aus teilkristallinen Polyamiden und aus organisch modifizierten Schichtsilikaten in einem Doppelschnecken-Extruder, wobei ein erster Teil der Polyamide in den Extruder-Einzug dosiert und aufgeschmolzen und das organisch modifizierte Schichtsilikat der Schmelze der Polyamide beigemischt und dann ein zweiter Teil der Polyamide der Mischung beigegeben wird, **dadurch gekennzeichnet, dass** die resultierende Schmelze einer Filtration unterzogen wird.

2. Verfahren nach Anspruch 1, **dadurch gekennzeichnet, dass** die Filtration der Schmelze unmittelbar vor der Extruder-Düse erfolgt.

3. Verfahren nach Anspruch 1, **dadurch gekennzeichnet, dass** eine Schmelze-Filtration während eines separaten Extrusionsdurchganges erfolgt.

4. Verfahren nach einem der Ansprüche 1 bis 3, **dadurch gekennzeichnet, dass** zur Durchführung der Schmelze-Filtration Drahtfilter mit einer Maschenweite von höchstens 200 µm, bevorzugt zwischen 50 µm und 100 µm verwendet werden.

5. Verfahren nach einem der Ansprüche 1 bis 4, **dadurch gekennzeichnet, dass** mit der Zugabe des organisch modifizierten Schichtsilikats ein Mischungsverhältnis im Bereich 60 bis 80 Gew.-% an Polyamiden und 40-20 Gew.-% an Schichtsilikaten hergestellt wird und dass der zweite Teil der Polyamide in der nötigen Menge der Mischung zugegeben wird, um die Endkonzentration der Schichtsilikate von maximal 10 Gew.-% in der Schmelze des Polyamid-Nanocomposites einzustellen.

6. Verfahren nach Anspruch 5, **dadurch gekennzeichnet, dass** mit der Zugabe des organisch modifizierten Schichtsilikats ein Mischungsverhältnis von 70 Gew.-% an Polyamiden und Gew.-30% an Schichtsilikaten hergestellt wird und dass der zweite Teil der Polyamide in der nötigen Menge der Mischung zugegeben wird, um die Endkonzentration der Schichtsilikate von 2.5 bis 6 Gew.-% in der Schmelze des Polyamid-Nanocomposites einzustellen.

7. Verfahren nach einem der vorhergehenden Ansprüche, **dadurch gekennzeichnet, dass** die Schichtsilikate unter Verwendung von Phosphoniumsalzen der Formel P-R₄-X organisch modifiziert werden, wobei R₄ drei Alkyloder Aryl-Reste darstellt und X ein Cl, Br oder J ist.

8. Verfahren nach einem der vorhergehenden Ansprüche, **dadurch gekennzeichnet, dass** die exfoliierten Schichtsilikate eine ultrafeine Körnung mit einer mittleren Partikelgrösse in mindestens einer Dimension von maximal 100 nm aufweisen.

9. Verfahren nach einem der vorhergehenden Ansprüche, **dadurch gekennzeichnet, dass** die Polyamide ausgewählt werden aus einer Gruppe, welche die Homopolyamide PA 6, PA 66, PA 46 sowie PA 11 und PA 12 umfasst.

10. Verfahren nach einem der vorhergehenden Ansprüche, **dadurch gekennzeichnet, dass** den teilkristallinen Polyamiden ein Anteil amorphes Polyamid zugemischt wird.

11. Verfahren nach einem der vorhergehenden Ansprüche, **dadurch gekennzeichnet, dass** die organisch modifizierten Schichtsilikate Phyllosilikate des Dreischichttyps (2:1) umfassen.

12. Spritzguss-Formteil, welches mit einer gemäss dem Verfahren nach einem der vorhergehenden Ansprüche erhaltenen Polyamid-Nanocomposite-Formmasse hergestellt ist, **dadurch gekennzeichnet, dass** es eine Oberfläche aufweist, die einen mittleren Rauheitswert (Rₐ) von weniger als 0.05 µm hat bzw. die eine gemittelte Rauhtiefe (R_{z}) von weniger als 4 µm hat.

13. Spritzguss-Formteil nach Anspruch 12, **dadurch gekennzeichnet, dass** es eine durch eine hochglanzpolierte Werkzeugform erzeugte glatte Oberfläche mit hohem Glanz umfasst.

14. Reflektor für Fahrzeugfahrbeleuchtungen, **dadurch gekennzeichnet, dass** er ein Spritzguss-Formteil nach Anspruch 12 oder 13 umfasst und direkt metallisiert ist.

15. Reflektor für Signal- oder Strassenleuchten bzw. Subreflektor für Fahrzeugfahrbeleuchtungen, **dadurch gekennzeichnet, dass** er ein Spritzguss-Formteil nach Anspruch 12 oder 13 umfasst und direkt metallisiert ist.

16. Reflektor nach einem der Ansprüche 14 oder 15, **dadurch gekennzeichnet, dass** die Metallschicht durch PVD-Methoden aufgebracht ist.

17. Verwendung einer gemäss einem oder mehreren der Ansprüche 1 bis 11 hergestellten Polyamid-Nanocomposite-Formmasse zum Spritzgiessen von Reflektoren für Fahrzeugfahrbeleuchtungen.

18. Verwendung einer gemäss einem oder mehreren der Ansprüche 1 bis 11 hergestellten Polyamid-Nanocomposite-Formmasse zum Spritzgiessen von Reflektoren für Signal- oder Strassenleuchten bzw. Subreflektoren für Fahrzeugfahrbeleuchtungen.

19. Verwendung einer gemäss einem oder mehreren der Ansprüche 1 bis 11 hergestellten Polyamid-Nanocomposite-Formmasse, **dadurch gekennzeichnet, dass** beim Spritzgiessen die Gasinnendrucktechnik eingesetzt wird.
